# EUROPEAN PATENT SPECIFICATION

(11) **EP 2 268 476 B1**
(45) Date of publication and mention of the grant of the patent: **22.07.2015**
(21) Application number: 09733784.4
(22) Date of filing: 23.04.2009
(51) Int. Cl.: B29C 70/52, H01B 5/10

(54) **PROCESS AND EQUIPMENT FOR PRODUCING COMPOSITE CORE WITH THERMOPLASTIC MATRIX FOR RECYCLABLE AND THERMALLY STABLE ELECTRICAL TRANSMISSION LINE CONDUCTOR**
VERFAHREN UND ANORDNUNG ZUR HERSTELLUNG EINES VERBUNDSTOFFKERNS MIT EINER THERMOPLASTISCHEN MATRIX FÜR EINEN WIEDERVERWERTBAREN UND WÄRMESTABILEN ELEKTRISCHEN ÜBERTRAGUNGSNETZLEITER
PROCEDE ET EQUIPEMENT DE PRODUCTION D' AME COMPOSITE AVEC MATRICE THERMOPLASTIQUE ET CONDUCTEUR DE LIGNE DE TRANSMISSION ELECTRIQUE RECYCLABLE ET THERMIQUEMENT STABLE

(30) Priority: 24.04.2008 HU 0800256
(43) Date of publication of application: 05.01.2011
(73) Proprietor: ENERGO-SPARE-TIME Kfc, 2040 Budaörs (HU)
(72) Inventor: Szaplonczay, Pál, 2040 Budaörs (HU); Karger Kocsis, József, 1037 Budapest (HU); Czigány, Tibor, 1048 Budapest (HU); Zsigmond, Balázs, 5091 Tószeg (HU)
(74) Representative: Jakabné Molnar, Judit
(86) International application number: PCT/HU2009/000037
(87) International publication number: WO 2009/130525

(56) References cited:
- JP-A- 11 348 140
- US-A- 5 207 850
- US-A- 5 294 461
- US-A1- 2004 131 834

## Description

### Scope:

The field of the invention relates to new, heat resistant, recyclable conductor for electrical transmission lines having composite load bearing core made by pultrusion using a thermoplastic polymer matrix, by *in situ* polymerization of the cyclic monomers and/or oligomers of the matrix polymer, optionally in the presence of polymers prone to melt phase transreactions, with reinforcements consisting of high modulus and strength fibers, optionally textile structures made of such fibers, which are mostly oriented along the axis of the core. The invention relates to process(es) aimed at the continuous production of said conductor core.

### State of the art:

Demand for electrical energy shows an increasing tendency all over the world. Erection of new transmission lines is very expensive and obtaining permit for new track is getting harder and harder in Europe. Therefore power suppliers mostly try to increase the capacity of existing, strongly overloaded transmission lines.

There are basically two technologies for increasing the transmission capacity:
- Increasing voltage level by using new types of cross-arms with composite insulators (upgrading e.g. from 66 kV to 220 kV).
- Replacing the traditional ACSR (Aluminum Conductor Steel Reinforced) cable operated at 80-85°C to new types of cable operated at 190-200°C.

This invention offers an environmentally friendly solution to the cheaper and easily realized so-called conductor replacement technology. The importance of this is supported by the fact that majority of outages is caused by the failure of the transmission line conductors. Conductor breakage, flashover of insulator chains are especially frequent during certain meteorological phenomena such as storm, icing appearing during sudden cooling following warming-up periods, which are nowadays customary rather than exceptional.

It is well known that the most widespread traditional ACSR transmission line conductors mentioned above consist of zinc or aluminum coated steel core and aluminum wire cable around it. The first is the load bearing element, while the second is responsible for current transport.

The distance of the transmission line poles is determined by several factors, such as the elongation of the steel core, sagging of the conductor, the weight of the conductor, wind and icing loads. The fact that the transmission network can hardly keep pace with the ever increasing electricity demand and the fact that there are serious limitations to the development of networks (especially in densely populated areas, where the land available is scarce and expensive, the safety distances being determined by standards) urge the service providers and the authorities to increase the transport capacity of the existing transmission lines. One method of this is to increase the diameter of the conductor, the other is to increase the operation temperature of the conductor. Both methods have their limitations. The increased diameter means larger weight with all its consequences (increased sagging and increased load of the poles). Certain improvement can be achieved if the conductors have trapezoidal instead of circular cross section as it improves the packing but this improvement is limited. The operation temperature of traditional ACSR conductors is limited typically to 80 °C, sometimes 90 °C by the fact that at higher temperature the crystalline structure of the cold-drawn conductor undergoes transformation (annealing), leading to a reduction of the strength. This can be somewhat countered if annealed aluminum conductors are used in combination with steel cable load bearing cores (ACSS = Aluminum Conductor Steel Supported, the solution of BICC company), but in this case, because of the weaker aluminum component an even higher load is exerted onto the steel core. Again another solution is offered by replacing aluminum by the heat resistant Al₃Zr alloy (e.g. Invar cable produced by the joint venture company of Furukawa and Fujikura companies, Japan), but this material is much more expensive. A good review of construction possibilities of cables consisting of purely metallic components can be read on the website of Southwire company (www.southwire.com, F. Ridley Thrash Jr.: "Transmission Conductors - A review of the design and selection criteria").

A further problem related to steel/aluminum combinations is that, in spite of zinc or aluminum coating of the steel core galvanic corrosion appears between the steel core and the aluminum cable conductor around it, leading to the reduction of the lifetime of the traditional cable.

The replacement of steel by any other material having higher specific mechanical loadability (e.g. specific tensile strength = strength divided by the density) than steel promises advantages. The application of polymer composites instead of steel seems to be especially advantageous in this respect. The replacement of the steel core by composites is supported by the fact that composite rods can be manufactured by pultursion technologies. In this case the reinforcement is usually some kind of fiber (glass fiber, carbon fiber, aramid fiber, basalt fiber or the like), which is axially, unidirectionally embedded into mostly thermosetting (crosslinking) resin systems.

Assuming this type of fiber arrangement the volume fraction of the fibrous reinforcement may achieve even 65 vol%. The matrix formed during the crosslinking (curing) process is supposed to embed the reinforcing fibers individually, to fix and protect them from outer impacts. The role of the interface (interphase) between the reinforcing fiber and the matrix transmits the load from the "weak" matrix to the "strong" load bearing fibers. Axial, unidirectional arrangement of the fibers in pulturded models are especially favorable for the load bearing cores of the transmission conductor cores, where tensional properties play the most important role. It is thus no chance that pulturded rods containing carbon or other fiber reinforcement have been suggested for transmission conductor cores.

Cables containing composite cores have been described by several patents. 3M company submitted several patents (e.g. US6180232, US6245425, US6336495, US6447927, US6460597, US7093416) for cables containing aluminum oxide (alumina) fiber reinforced aluminum conductors (ACCR = Aluminum Conductor Composite Reinforced), see the website http://solutions.3m.com/wps/portal/3M/en_US/EMD_ACCR/ACCR_Home (April 2008). The use of alumina composite core and Al-Zr alloy conductor reduces the danger of corrosion and increases the continuous use temperature to 210 °C but the density reduction is not so large as in the case of polymer composite cores, and the price is fairly high (6-8 times higher than that of ACSR cables). US7093416 mentions composite cores with either thermosetting or thermoplastic polymer matrices, but there is no actual teaching with respect to thermoplastic matrices.

Composite Technology Corporation (CTC) has filed several patents (e.g. US7060326, US719522, US7211319, US20040026112, US20040131834, which discloses a process according to the preamble of claim 1, US20040131851, US20040026112) for transmission line conductors containing composite load bearing elements (ACCC = Aluminum Conductor, Composite Core), which describe several elements of the construction and processing method. This type of conductor can be loaded up to 200 °C if the matrix used is the special epoxy resin specified in the patents, having a glass transition temperature of 215 °C. It has to be noted, however, that the impact and cracking resistance of epoxy resins usually decrease with thermal resistance as the higher the crosslink density the higher the brittleness of the resin. One aim of the consecutively submitted CTC patents was to increase the processing speed, another was to improve the protection of the composite core against mechanical and chemical (hydrolytic) impacts. US2007193767 describes again a transmission line conductor with composite core, wherein the composite core is surrounded by an insulating layer with the aim of preventing galvanic contact and corrosion between the carbon fiber reinforced core and the aluminum conductor. The essence of the patent is that instead of the polyimide (PI) tape insulation PEEK tape was used, as it does not require such high heat treatment temperature. FR2836591describes a cable with composite core reinforcement, wherein the reinforcing fibers of the core are surrounded by a braided layer which is finally coated by molten aluminum.

Although tensile strength is the dominant property, this is not the only requirement to be fulfilled by the composite core. The weight of the cable and additional weight due to icing cause considerable sagging which induces bending stress in the cable. Wind blows result in dynamic, repeated fatigue loads (galloping). The patents of CTC listed above mention that in principle (and also in practice) the composite core can be prepared from a single type of reinforcing fiber. In practice, however, solutions with concentrically distributed, different reinforcing fibers are more preferred, advantageously carbon fibers are situated inside, glass fibers outside. Cores with carbon fibers alone are advantageous from the strength and thermal expansion viewpoints, but they are much too rigid. Taking into account that elongation at break values are much higher for glass fibers than for carbon fibers, the structure is less sensitive to bending. Too high rigidity is disadvantageous also when winding to reels of standard size. Another reason for using concentric core structure is that corrosion processes appear when carbon fibers and aluminum exhibit galvanic contact. This is prevented by the glass fiber reinforced resin layer built around the carbon fiber reinforced central core. This layered "hybrid" reinforcement, however, may cause mechanical stress concentration because of the thermal expansion differences, which, by micro-cracking may promote failure. The reason of this phenomenon is that neither of the fiber components is ductile.

CTC patents mention a very broad class of matrix resins in general, but all examples are related only to thermosetting resins and the general description does not teach anything about impregnation by thermoplastic resins. US7015395 filed by Gift Technologies describes a composite core with thermoplastic matrix, but it is polypropylene, which seriously limits its heat resistance and the embedded reinforcing fiber is glass with not totally satisfactory mechanical strength. This choice might have been motivated by the fact that a mixed-fiber structure was available for this material pair, from which the consolidated composite core could be prepared easier than by impregnating the reinforcing fibers. In the case of pultruded polymer composites with thermoplastic matrix the perfect impregnation of reinforcing fibers is seriously hampered by the high melt viscosity, especially in the case of systems with high (>60 vol%) fiber contents. Although thermoplastic matrices have a big advantage over thermosetting resins: after the lifetime of the continuous fiber composites made of them can be processed into short fiber reinforced pellets, which means that they can be utilized for other purposes, i.e. they can be recycled. Taking into account the non-negligible mass of transmission cable this is an important viewpoint. It should also be emphasized that the resistance of thermosetting matrix composites against dynamic, repeated, fatigue-like and abrasive stresses is much lower than that of thermoplastic matrix composites. The main reason of this is that the ductility of thermosetting matrix composites is low, they are prone to brittle fracture. Although this latter does not appear in the presence of reinforcing fibers - micro-cracking develops instead, but in long term this also leads to failure.

Another problem with thermosetting epoxy polymers is that a chemical reaction (crosslinking) occurs during the manufacturing of the product. A large amount of anhydride vapor forms during this process which is harmful to the human organism and the production waste is categorized as hazardous waste. A further problem is that the utilization of the epoxy resin matrix at the end of the lifecycle is not solved. A part of it is milled and utilized as filler e.g. in road foundations or in other thermosetting composites, but the majority is processed as hazardous waste in incinerators. Thermoplastic matrices, however, can be repeatedly melted when processing into new products and the final form of the product is determined by shaping the melt. There are no chemical reactions, the production waste, reject and conductor cores removed at the end of the lifecycle can be easily recycled or can be utilized as a raw material of other products, so they are not regarded as hazardous waste.

Taking into account all these and the known patented solutions the most important difference amounting to invention is that the load-bearing, composite core developed by us does not cause harm to the environment during production and can be easily utilized at the end of the lifecycle.

None of the patents mentioned so far teaches anything in this respect. There are references to thermoplastic matrix composites in the general description, but there are no examples and the description does not contain any detailed information regarding the manufacture of composite cores with thermoplastic matrices. The technical literature contains references to the pulturison of rods containing unidirectionally oriented fiber structures. In these cases, however, almost always the matrix polymer is the matrix forming material, added in the form of powders or fibers. The melt viscosity of polymers is so high, however, that the impregnation reinforcing fibers cannot be achieved with a high enough degree or quality. The required impregnation can usually be achieved if the viscosity of the matrix forming melt is much below 1 Pa·s. As this criterion is almost always met by thermosetting resins, this is the reason of the widespread use of pultruded products with thermosetting resins.

The only exception is when the thermoplastic resin is formed by ring opening polymerization. Such processes are described e.g. by patents US4778874 and US5207850 for cyclic polycarbonate oligomers, US5424388 for the anionic polymerization of caprolactam, EP1570976 for cyclic terephthalate oligomers (these latter are commercially available from Cyclics Corporation). US5294461 describes a pultrusion method which can be used either for thermoplastic or for thermosetting components. The example for thermoplastic matrix is the ring opening polymerization of polyamide 6. CN1762995 and CN1762996 describe cyclic aromatic oligomers conating sulfur, which can be transformed into thermoplastic polymer by ring opening polymerization and can be used as composite matrices. CN1392147 describes a synthetic method for producing cyclic aromatic ketons which can be polymerized, while CN1231301 describes the polymerization of cyclic polyaryl-ether ketones. WO9942523 describes laminates produced by the ring opening polymerization of polyphenylene-ether oligomers. EP0505139 produces thermoplastic matrix composites form the reaction of bis-acyl caprolactam and essentially aromatic oligomer which have aliphatic -OH end-group, which are low viscosity starting materials. There are thus known materials and processes by which pulturded end products of high fiber content can be produced from low viscosity starting materials.

### Scope of the invention and its new features:

The scope of the present invention is to develop environmentally friendly load-bearing composite cores for electrical transmission lines with thermoplastic matrix, which are characterized by high thermal resistance (>190°C), good resistance against abrasive stresses, which can be simply recycled at the end the lifecycle, with improved properties due to their structure and composition. Improved properties of the composite core mean mainly improved impact resistance, better resistance against flexural fatigue and improved interlaminar fracture energy. A further scope of the invention is to develop a high productivity, high quality process for the production of the composite core and of the transmission cable.

The basis of the invention is the fact (known by itself) that if cyclic monomers, oligomers or a mixture thereof are used in the presence of a proper catalyst the low melt viscosity allows a perfect impregnation of the reinforcing material, as well as a high productivity pultrusion process during the *in situ* polymerization process. A further fact (also known by itself) is that the properties of the thermoplastic matrix can be tailored by copolymerization and/or by melt phase transreactions. Most important new feature of our invention is that by melt phase transreactions and by the proper selection of polymeric reinforcing fibers it is possible to modify the structure of the load bearing composite core (e.g. by generating gradient structure) without influencing negatively the recyclability of the structure obtained this way. Modification by transreactions can be achieved by including fibers with melting points below the processing temperature of the matrix material or even below the temperature of the ring opening polymerization, and may react with the *in situ* polymerizing system. A further advantage of transreactions appears during recycling. Transreactions improve the compatibility of polymeric components thus the properties of the polymer mixture. Additionally one may use reinforcing fibers also consisting of thermoplastic polymers, but having melting points above not only the polymerization temperature but also above the melting point of the polymer formed during the polymerization. (It has been assumed that both the matrix polymer and the reinforcement consist of partially crystalline polymers. If any of the polymers mentioned is amorphous, glass transition temperature should be used instead of the glass transition temperature). The reinforcing fiber should be selected so that the polymer formed during the polymerization process and/or during the transreaction wets its surface well. It is additionally useful if transreactions occur between the material of the reinforcing fiber and the matrix polymer, as it improves the adhesion. The fibers designed to participate in the transreactions or the thermoplastic polymer reinforcing fibers which remain after the reaction should be arranged onto the reinforcing fiber bundle (typically carbon fiber bundle constituting the central part of the composite core) so that after being soaked by the cyclic oligomer it forms a concentric, electrically insulating layer between the carbon fiber internal core and the aluminum conductors to be twisted around it later. This prevents not only the galvanic contact and corrosion, but also provides a mechanical and hydrolytic protection to the central part of the composite core. The density of the polymer reinforcing fibers is lower than that of glass fibers, so, in the case of identical thickness it decreases the mass of the composite core, its modulus is lower than that of glass fibers, so a thinner layer is enough to achieve the proper strength/elasticity ratio and its elongation to break is substantially higher than that of glass fibers, thus the crack and fatigue resistance of the composite core will be high, and it will dampen the eventual vibrations better. All this is achieved so that at the end of the cable lifecycle valuable short or long fiber reinforced thermoplastic pellets can be prepared, which can be utilized e.g. in by the automotive industry or can be used for other structural purposes.

It is surprising for those skilled in the art that in the presence of proper catalysts certain monomers and/or oligomers and mixtures thereof undergo *in situ* polymerization and the properties of the product formed can be tailored according to our needs. So far the selective nature of ring opening polymerizations has been emphasized. It is even more surprising that proper polymers are capable of transreactions with the medium undergoing *in situ* polymerization if their temperature of liquefaction is lower than the temperature of the *in situ* polymerization.

It is also surprising that the medium undergoing *in situ* polymerization exhibits good adhesion to properly selected polymer textile fibers or structures having a melting point higher than the polymerization temperature.

### Definitions, figures:

Under *cyclic oligomer* a cyclic compound is meant having a few (1-10) repeating units and which, in the presence of proper catalysts, may transform into open chain (linear) polymers by ring opening. The limiting case of cyclic oligomers is the cyclic monomer, also capable of ring opening polymerization. In practice frequently not pure cyclic monomers or oligomers are used, but a mixture of oligomers of various degree of polymerization, as the melting point of such mixtures is lower than those of pure monomers or oligomers.

Under *transreaction* such reactions are meant which occur between cyclic oligomers and other, chemically related polymers, which dissolve partly or completely in the molten oligomers or in the reaction mixture and result in copolymers (S. Fakirov (editor): Transreactions in Condensation Polymers, Wiley -VCH, Weinheim, 1999). Advantageously the catalyst of transreactions is identical with that of the ring opening polymerization.

*Polymer composites* are reinforced polymers with two or more materials of different composition, which can be well distinguished from each other but which contact each other through a common interlayer. The properties of composites depend on the proper combination of the constituents and these properties are better than those of the constituents and are frequently individual (see: SP Systems: Guide to Composites, http://www.gurit.com). Composites consist of fibers and matrix, wherein the fiber is the load bearing, matrix is the load transmitting component. Under *long fiber composites* such composites are meant wherein the length of the reinforcing fibers is practically infinitely larger than its diameter. A composite is called *unidirectional* if the reinforcing fibers are essentially parallel with each other.

*Pultrusion* is a processing technology wherein essentially infinite, parallel fiber bundles (which are called *rovings* in the case of glass fibers and *tows* in the case of carbon fibers) are soaked by liquid resins or by polymer melts, then the composites are *consolidated* (i.e. the excess polymer and voids are removed) by drawing the soaked fiber bundle through a shaping tool. Hardening of the composite occurs via chemical reactions in the case of thermosetting resins and by cooling in the case of thermoplastic systems. Profiles, tubes and rods may be produced by pultrusion.

### Structure of the carbon fiber reinforced cable with thermoplastic matrix, according to the invention:

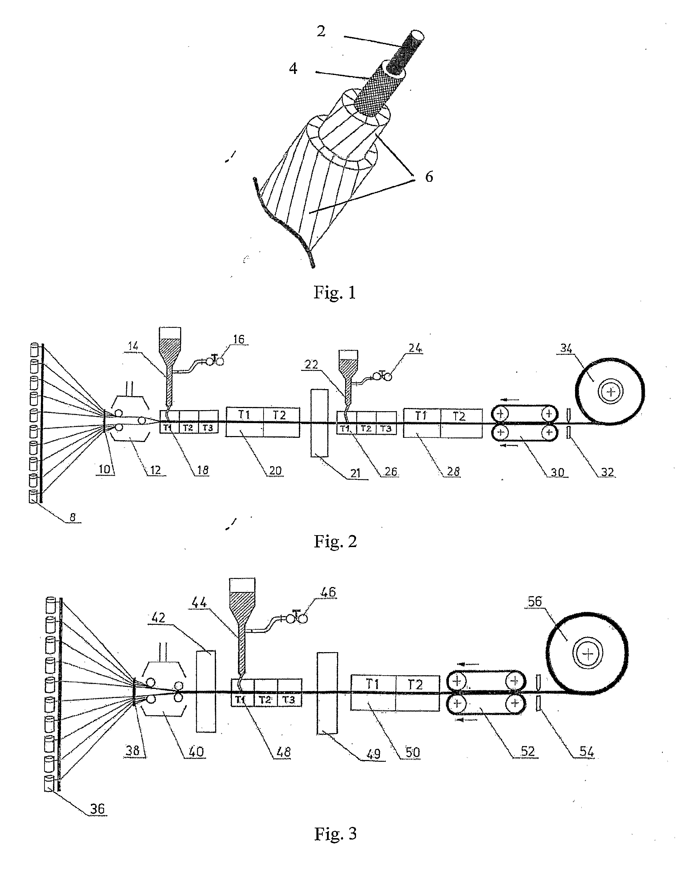

The structure of the load bearing cable core and of the cable itself is shown in Figure 1.

The load bearing core (2) consists of carbon fibers (or, occasionally other, high strength inorganic or organic fibers) embedded into heat resistant thermoplastic matrix. Protective coating (4) is a protecting layer with a matrix essentially identical with that of the core (2) (with possible modifications by the material of the thermoplastic fibers participating in the transreaction), which optionally contains thermoplastic reinforcing fibers, which, however, remain solid even after the full development of the matrix, finally both (2) and (4) are coated by twisted aluminum conductor profiles.

One realization possibility of the production process according to the invention is shown by Figure 2.

Carbon fiber bobbins (8) and their supporting frame are shown in Figure 2.

Unwinding of carbon fiber tows from the bobbins (10) is done by mechanical pre-stressing (braking) so as to ensure a uniform fiber stress in the product.

Unit No. 12 makes possible the pretreatment of the continuously passing carbon fibers (preheating, removal of adsorbed moisture, occasionally plasma treatment).

From the extruder feeder (14) the thermoplastic matrix (or the cyclic oligomer used for the production of the polymer) - which may be a pellet or powder at room temperature - gets in the presence of inert gases (16) (with the exclusion of oxygen) into the feeding zone of the extruder in-between the screw flights where it gradually melts and the final shape of the pultruded profile is determined by die (18) attached to the end of the extruder. Impregnation of the individual carbon fibers occurs in this die (18), which is divided to at least two heating zones, where under the effect of heat viscosity sinks considerably below 1 Pa.s, so it can easily impregnate the individual fibers.

In the oven (20) divided to at least two heating zones full polymerization (and perhaps transreactions) are realized in the form of ring opening reactions.

Unit No. 21 applies the thermoplastic textile fibers onto the already impregnated core by braiding or by winding.

The screw of extruder No. 22 melts the cyclic oligomers fed in order to coat on-line carbon fiber core coming from oven No. 20, covered by a new fiber layer. The cyclic oligomer system applied in the second step is not necessarily identical with the one used for the impregnation of the core.

Similarly to extruder No. 14 described above the melting of the compound mentioned above in the feeding zone of extruder No. 22 occurs again in the presence of inert gases (24).

The protective layer No. 4 (with a typical thickness of 0.1-5 mm) is applied onto the carbon fiber reinforced core (2) by on-line co-extrusion, using the die (26) divided to at least two heating zones. Full polymerization of the protective layer (4) and its complete fusion with the carbon fiber reinforced core (2) occurs in oven No. 28, divided to at least two heating zones.

The mechanical force necessary for the continuous production of the profile with carbon fiber reinforcement and thermoplastic matrix described above is provided by the haul-off unit (30).

The cut-off unit (32) cuts the profiles made by continuous pultrusion into pre-set length. Finally, depending on the demand on diameter and length, but typically 1500-2000 m of the carbon fiber reinforced profiles are wound up by the winding unit No. 34.

Another possible realization is shown in Figure 3.

Carbon fiber bobbins and their holder frame together with the pre-stressing unit are denoted as No. 36 in Figure 3.

Fiber guide unit (38) prevents the twisting of the tows.

Unit No. 40 performs carbon fiber pretreatment, i.e. heating, removal of adsorbed humidity, perhaps plasma treatment.

Unit No. 42 braids or winds polymer textile fibers in cross-direction to the carbon fiber tows (pullbraiding, pullwinding).

From the feeder (44) of the extruder the thermoplastic matrix gets into the feeder zone of the extruder and melts there gradually.

In unit No. 46 oxygen is displaced by inert gas.

Unit No. 48 is the heated die (with at least two heating zones) giving the final shape of the pultruded profile, the individual carbon fibers are impregnated here.

Unit No. 49 performs the application of thermoplastic textile fibers onto the preimpregnated core by braiding.

Unit No. 50 is the oven, where the polymerization process is completed (at least two heating zones).

Unit No. 52 is the haul-off unit providing the mechanical force necessary for the continuous production of the carbon fiber reinforced profile described above.

Unit No. 54 is the cut-off unit which (depending on the pre-set length) cuts the continuously pultruded profiles into pieces.

Unit No. 56 is the winding unit, which winds up the carbon fiber reinforced profiles to required diameter and length.

Here the essentially parallel carbon fiber tows constituting the core are covered before impregnation by a continuous fiber system produced by braiding, circular knitting or by other technology, which includes the polymer fibers consumed in the transreaction or remaining after the transreaction.

The advantage of this solution over that shown in Figure 2 is that impregnation and coating by an insulating layer can be performed in a single step. The disadvantage is that the outer layer is not so smooth as in the case of parallel tows, therefore the removal of the excess resin is not so easy by drawing it through the die and one cannot use two different oligomer systems for impregnating the core and the coating layer. It is true, however, that there are ductile fibers (too) in the outer layer, which reduces the probability of fiber fracture when applying perpendicular pressure to remove excess resin. One may decide between the two solutions based on technical considerations.

### Detailed description of the invention:

Herein below a more detailed discussion of the raw materials and solutions to be used for the production of the composite conductor core according to the invention is provided.

The *reinforcement* of thermoplastic matrix core denoted by No. 2 on Figure is carbon fiber, but it may also be glass, basalt, aramid, or other synthetic or natural fiber. The advantageous arrangement of the fibers is unidirectional, wherein the fibers are oriented parallel with the axis of the rod. It is important to mention that preparation material (sizing) compatible with the thermoplastic matrix is applied onto the elementary carbon fibers (either at the fiber manufacturer or later), which promotes the ideal adhesion between the carbon fiber and the matrix. Mäder et al. (Composites Science and Technology 67, 3140-3150, (2007)) studied for glass fiber reinforcement and cyclic butylene terephthalate (CBT) which composition of the sizing provides optimal properties. They found that a joint application of aminosilanes and epoxy based film forming materials gives the best results. Although results obtained for glass fibers cannot be simply transferred to carbon fibers because of the differences in the surface chemistry, the results are important as they indicate the necessity of optimizing the sizing system.

The *thermoplastic matrix* is a system polymerizing by ring opening mechanism. For this purpose mostly polyamides, polyesters, polycarbonates, polylactides, poly(phenylene sulfide), poly (phenylenes disulfide derivatives) and polyaryl ether ketone derivatives can be used. The starting materials are always cyclic monomers and/or oligomers, which can be prepared or purchased in this form. (For the development of cyclic polycarbonate and polyester oligomers see e.g. Journal of Polymer Science: Part A: Polymer Chemistry, 46, 1151-1164 (2008); for similar applications of aromatic polysulfides see e.g. Journal of Material Science 42, 1156-1161, (2007), for the ring opening polymerization of lactams see e.g. R. Puffr, V. Kubanek: Lactam Based Polyamides, Polymerization, Structure, CRC Press, (1991)). Cylic butylene terephthalate oligomers may be purchased from Cyclics Corporation in various catalyzed or non-catalyzed forms, caprolactam or lauryllactam may be purchased from several manufacturers for polyamide polymerization. Preparation of cyclic oligomers from high performance engineering plastics with extreme heat resistance is right now treated by the technical literature only, but it is expected that such products appear soon on the market.

A great advantage of the ring polymerization of cyclic oligomers is that it is usually nearly non-thermal, the driving force being rather the entropy change (see EXPRESS Polymer Letters 1, 60-68, (2007)) - which makes easier the isothermal control of the polymerization reaction. (The nearly non-thermal character is *not* true for cyclic *monomers* as e.g. caprolactam, lauryllactam etc.) Ring opening polymerization of cyclic oligomers is usually performed isothermally, below the melting point of the polymer being formed. The molecular weight of the polymer obtained as a result of the polymerization is usually high, the mechanical properties are advantageous. In the case of poly(butylene terephthalate) obtained by the polymerization of cyclic butylene terephthalate (CBT), denoted as pCBT, does not exhibit optimum impact resistance because of the large crystallinity, therefore it may be useful to combine it with *nano-fillers,* such as organophilic nano-clay or carbon nanotubes (see Macromolecules, 36, 8593-8595 (2003)). This affects advantageously not only the crystalline properties, but also flammability. It is generally accepted that although nanofillers are not flame retardants by themselves, they reduce substantially the heat release rate during burning of plastics, especially the maximum value, the so-called peak heat release rate. The application of nanofillers in the construction according to the invention improves its mechanical properties and decreases the probability of flame spread in case of a short circuit of transformer fire. When using nanofillers, however, care should be taken not to increase the viscosity of the polymerizing cyclic oligomer melt by using too much filler as it would hamper the impregnation of the fibers. The amount of useful nanofiller is 0.5-5 wt% of the cyclic oligomer, advantageously 1-2 wt%. The production technology of pCBT requires high attention as the mechanical properties depend on the polymerization conditions in a very complicated manner (e.g. whether the crystallization occurs during the polymerization or only afterwards, what are nucleation conditions etc.) even in the absence of nanofillers.

In addition to using nanofillers the impact strength of the polymer prepared by the polymerization of cyclic oligomers can be improved by *copolymerization,* either by using more kinds of cyclic monomers or by using so-called *transreactions,* to be discussed later. CBT can be copolymerized e.g. with caprolactam (Macromolecules 37, 6793-6800, (2004)), or caprolactam with lauryllactam (PL159800, Journal of Applied Polymer Science, 36, 495-509, (1988)), which improves the impact strength.

In order to make pultrusion easier or to improve the properties of the pultruded core carefully selected textile fibers may be used either within the core No. 2 of Figure 1 (combined with carbon fiber), or in the layer No. 4 which is used to prevent galvanic corrosion and to ensure proper strength/elasticity ratio. If used in the outer layer the fiber to be used in the transreaction may be braided, wound, knitted or applied around the carbon fiber reinforced core by any other method. Under polymer textile fiber prone to transreaction any polymer fiber is meant, provided that it can be characterized by any of the following statements:
a.) Its melt temperature is lower than the pultrusion temperature and may participate in transreactions with the *in situ* polymerizing system.
b.) Its melt temperature is higher than the pultrusion temperature, but in a melt shared with the matrix transreactions may occur between them.

Advantageous combinations of matrix/textile "modifier" may be e.g. the following:
a.) Poly (butylene terephthalate) (PBT) /polycaprolactone (PCL); PBT/polylactide; polyamide 6/polyamide 12; polyamide 6/ polyamide 612 copolymer; polyamide 6/polyetheramide copolymer (US4297454)
b.) Polyamide-6/polyamide-66; PBT/poly (ethylene terephthalate) (PET); Polyamide-12/polyamide-6 or polyamide-66; polycarbonate (PC)/PET

In case a) the occurrence of transreactions improves the ductility of the given layer, as the crystallinity of PBT decreases. This is very advantageous for the cable core structure, taking into account the bending and flexural-fatigue stresses. In the case of polymer additives undergoing transreactions during dissolution care should be taken not to impair the heat resistance of the matrix polymer (the melting point of PA6 is 220 °C, that of PBT is 224 °C, both higher than the glass transition point of typical epoxies). Too high degree of copolymerization (especially random copolymerization) decreases crystallinity and crystallite size, resulting in a reduction of the melting point.

In case b) we have a special kind of reinforcement. The crystallization of the *in situ* polymerizing matrix starts from the textile fiber. The latter acts as heterogeneous nucleating agent, resulting in transcrystallinity. The presence of a transcrystalline interface ensures the load transmission from the matrix to these textile fibers. The following article is authoritative with respect to the notion, appearance and effect of transcrystallinity: H. Quan, Z.-M. Li, M.-B. Yang and R. Huang: On transcrystallinity in semi-crystalline polymer composites, Composites Science and Technology 65, 999-1021, (2005). With respect to transreaction occurring or induced in melt phase the contents of the following book are authoritative: S. Fakirov (editor): Transreactions in Condensation Polymers, Wiles -VCH, Weinheim, 1999. In relation to this it is important to note that it is extremely advantageous if the catalyst of the ring opening polymerization is identical with that of the transreaction.

The conductor layer(s) denoted by No. 6 on Figure 1 are applied onto the core described above. Regarding the application method of the conductors and the geometry of the aluminum wire profiles various traditional solutions are known, see F. Ridley Thrash, Jr.: "Transmission Conductors - A review of the design and selection criteria" at the following website: www.southwire.com.

### Examples:

In the following some (no-exclusive) examples are described for the realization of our invention.

### Example 1.

A rod of 6 mm diameter and circular cross section, containing 60 vol% carbon fiber (CF) was pultruded using the following materials:
CBT oligomer mixture (n=2...7) containing catalyst - CBT 160 (Cyclics Europe, Germany), CF tow consisting of 50,000 elementary fibers Sigrafil C30 T050 EPY 50 K (SGL Carbon Germany), polyethylene terephthalate (PET) textiles (0,5 tex elementary fibers, Trevira, Germany), polycaprolactone fiber (0,5 tex elementary fibers, made of Capa 650 PCL /Solvay, Belgium/).

Pultrusion was performed according to Figure 3 at a rate of 0.7 m/min. Zone temperatures T₁, T₂ and T₃ of unit No. 48 were 170, 180 and 190 °C respectively. Air circulation thermostats of unit No. 50 were set to T₁=T₂=240 °C. Coating of the CF tow was achieved by roving in one layer using PET or PCL fibers. A composite core without textile fiber roving was also prepared as a reference. Test specimens were machined form the rods and were tested by tensile and bending tests according to the relevant standards (EN ISO 527 and EN ISO 178). According to the microscopic study of the polished sections that, in contrast to PCL the PET fiber remained. It shows that CBT copolymerized with PCL, i.e. trans-esterification reactions occurred between them.

Experiments were made to decide the effect of direct copolymerization of caprolactone (CL) and CBT 160. In this experiment the same amount of CL (Solvay, Belgium) was added to CBT 160, as that built into the core by braiding PCL. Test results are summarized in Table 1.

**Table 1. Results of tensile and bending tests**

| Material | Tensile | | | Flexural | |
|---|---|---|---|---|---|
| | Modulus [GPa] | Strength [MPa] | Elongation [%] | Modulus [GPa] | Strength [MPa] |
| Reference | 114 | 1070 | 0,9 | 96 | 970 |
| Core with PET fiber | 125 | 1200 | 1,3 | 95 | 1100 |
| Core PCL fiber | 140 | 1340 | 1,7 | 90 | 1250 |
| Core with CL copolymerization | 148 | 1460 | 2,0 | 92 | 1400 |

| | | | | | |
|---|---|---|---|---|---|
| Note: standard deviation is lower than ±5 % | | | | | |

### Example 2.

In this case the process according to Figure 2 was used with the same materials described in Example 1. Parameters of the experimental production were also identical with those of Example 1. As our goal was in this case to analyze the role of the outer layer formed in the direct copolymerization, the impregnation unit No. 22 was used for applying either CBT 160 (reference), or CBT 160 containing 5 wt% CL. In a further experiment the material of the outer layer was modified by the addition of 0.5 wt% multi-walled carbon nanotube (MWCNT, Baytubes® C150 P, Bayer Materials, Germany. Tensile properties are summarized in Table 2.

**Table 2. Tensile test results**

| Material | Tensile | | |
|---|---|---|---|
| | Modulus [GPa] | Strength [MPa] | Elongation [%] |
| Reference | 93 | 940 | 1,3 |
| Coated CL/CBT copolymers | 90 | 1390 | 2,3 |
| Coated CL/CBT copolymers containing MWCNT | 92 | 1450 | 2,2 |

It should be noted that modifying effect of MWCNT was also observed in the flame retardance tests too (decreased dripping tendency).

### Example 3.

In this case the process of Figure 3 was followed using activated anionic polymerization technology of Quattroplast Ltd. (Hungary) based on ε-caprolactam. The starting material was a 90/10 mixture of carpolactam and lauryllactam. For the braiding of the CF tow (identical with that mentioned in Example 1) a PA 6.6-based fiber (1,5 tex nylon fiber, Solutia Inc. USA) was used in one layer. The temperature program of unit No. 48 was: T₁, T₂ and T₃ were 100, 120, 150 °C respectively, while the corresponding data of unit No. 50 were T₁ = T₂ = 220 °C. The pultursion rate was in this case 1 m/min. As reference systems were used which did not contain either lauryllactam or the PA 6.6. braiding, or none of them. The results of the bending test are shown in Table 3.

**Table 3. Results of the bending test**

| Material | Flexural | |
|---|---|---|
| | Modulus [GPa] | Strength [MPa] |
| Reference - without lauryllactam | 95 | 980 |
| Copolymerization with lauryllactam | 115 | 1250 |
| Reference - with copolymerized core but without PA 6.6 braiding | 98 | 1130 |
| Copolymer core with PA 6.6 braiding | 96 | 1410 |

The advantage of copolymerization also showed up in the impact strength result. The impact strength (EN ISO 179) of the second sample in Table 3 exceeded by about 40% the corresponding value of the first reference sample.

## Claims

1. Process for the production of composite core with thermoplastic matrix for electrical transmission line cables with the incorporation of reinforcing fibers and structures using pultrusion, where
a) a structure based on thermoplastic textile fibers is used to modify the structure of the core, and
b) the material constituting the matrix of the thermoplastic core is formed in a ring opening polymerization process of oligomers and mixtures thereof having a melt viscosity lower than 1 Pa.s, and
c) the structure of the core and the material properties of the core may be modified by melt phase transreactions, which may occur either during the pultrsuion process or during the melting process used for the recycling the core material.
***characterized in that*** by adding 0.5-5 wt%, advantageously 1-2 wt% nanofiller as compared to the weight of the materials used for the ring opening polymerization the burning rate of the core and the peak value thereof is substantially reduced.

2. Process according to claim 1 ***characterized in that*** the thermoplastic textile fibers used to modify the core structure or the core material have melting temperatures higher than the temperature of the ring opening polymerization, the fibers play a reinforcing/flexibilizing role during the use of the cable, the structure modifying transreaction occurs during recycling.

3. Process according to claim 1 ***characterised in that*** the thermoplastic textile fibers used to modify the core structure or the core material have melting temperatures lower than the temperature of the ring opening polymerization, the structure modifying transreaction occurs already during the production of the cable.

4. Process according to claim 1 ***characterized in that*** the materials of the ring opening polymerization are advantageously lactam, ester or ether type mono- and/or oligomers or mixtures thereof.

## Patentansprüche

1. Verfahren zur Herstellung eines Verbundstoffkerns mit thermoplastischer Matrix für elektrische Übertragungsnetzkabel durch Anwendung von Verstärkungsfasern und -strukturen unter Verwendung von Pultrusion, wobei
a) eine Struktur auf Basis thermoplastischer Textilfasern verwendet wird, um die Struktur des Kerns zu modifizieren, und
b) das Material, aus welchem die Matrix des thermoplastischen Kerns besteht, in einem Ringöffnungs-Polymerisationsverfahren aus Oligomeren und deren Mischungen hergestellt wird, die eine Schmelzviskosität von weniger als 1 Pa.s aufweisen, und
c) die Struktur des Kerns und die Materialeigenschaften des Kerns durch Schmelzphasentransreaktionen modifiziert werden können, die entweder während des Pultrusionsverfahrens oder während des Schmelzverfahrens stattfinden die zum Recyceln des Kernmaterials verwendet werden,
**dadurch gekennzeichnet, dass** durch Zugabe von 0,5 bis 5 Gew.-%, vorzugsweise 1 bis 2 Gew.-% Nanofüllstoff im Vergleich zum dem Gewicht der für die Ringöffnungspolymerisation verwendeten Materialien die Brenngeschwindigkeit des Kerns und der Spitzenwert davon wesentlich verringert werden.

2. Verfahren nach Anspruch 1, **dadurch gekennzeichnet, dass** die thermoplastischen Textilfasern verwendet werden, um die Kernstruktur zu modifizieren oder das Kernmaterial Schmelztemperaturen aufweist, die höher als die Temperatur der Ringöffnungspalymerisation sind, wobei die Fasern eine verstärkende/flexibilisierende Rolle während der Verwendung des Kabels spielen, wobei die strukturmodifizierende Transreaktion während des Recycelns stattfindet.

3. Verfahren nach Anspruch 1, **dadurch gekennzeichnet, dass** die thermoplastischen Textilfasern verwendet werden, um die Kernstruktur zu modifizieren oder das Kernmaterial Schmelztemperaturen aufweist, die geringer als die Temperatur der Ringöffnungspolymerisation sind, wobei die strukturmodifizierende Transreaktion bereits während der Herstellung des Kabels stattfindet.

4. Verfahren nach Anspruch 1, **dadurch gekennzeichnet, dass** die Materialien der Ringöffnungspolymerisation vorteilhaft Lactam, Ester oder Ethertyps Mono- und/oder Oligomere Verbindungen oder deren Mischungen sind.

## Revendications

1. Procédé de production d'une âme composite avec matrice thermoplastique pour câbles de ligne de transport d'électricité avec l'incorporation de fibres et structures de renforcement par pultrusion, dans lequel
a) une structure basée sur des fibres textiles thermoplastiques est utilisée pour modifier la structure du coeur, et
b) le matériau constituant la matrice du coeur thermoplastique est formé dans un procédé de polymérisation par ouverture de cycle d'oligoméres et de mélanges de ceux-ci ayant une viscosité à l'état fondu inférieure à 1 Pa.s, et
c) la structure du coeur et les propriétés de la matière du coeur peuvent être modifiées par des transréactions en phase fondue, qui peuvent survenir pendant le procédé de pultrusion ou pendant le procédé de fusion utilisé pour le recyclage du matériau du coeur,
**caractérisé en ce qu'**en ajoutant 0,5-5 % en poids, avantageusement 1-2 % en poids de nanoadditif, rapporté au poids des matériaux utilisés pour la polymérisation par ouverture de cycle, la vitesse de combustion du coeur et la valeur de crête de celle-ci sont sensiblement réduites.

2. Procédé selon la revendication 1 **caractérisé en ce que** les fibres textiles thermoplastiques utilisées pour modifier la structure du coeur ou le matériau du coeur ont des températures de fusion supérieures à la température de la polymérisation par ouverture de cycle, les fibres jouent un rôle de renforcement/assouplissement pendant l'utilisation du câble, la transréaction modifiant la structure survient pendant le recyclage.

3. Procédé selon la revendication 1 **caractérisé en ce que** les fibres textiles thermoplastiques utilisées pour modifier la structure du coeur ou le matériau du coeur ont des températures de fusion inférieures à la température de la polymérisation par ouverture de cycle, la transréaction modifiant la structure survient déjà pendant la production du câble.

4. Procédé selon la revendication 1 **caractérisé en ce que** les matériaux de la polymérisation par ouverture de cycle sont avantageusement des mono- et/ou oligomères de type lactame, ester ou éther ou des mélanges de ceux-ci.
